# EUROPÄISCHE PATENTSCHRIFT

(11) **EP 2 094 462 B1**
(45) Veröffentlichungstag und Bekanntmachung des Hinweises auf die Patenterteilung: **20.07.2011**
(21) Anmeldenummer: 07846636.4
(22) Anmeldetag: 16.11.2007
(51) Int. Cl.: B29B 17/00, B29B 17/02

(54) **VERFAHREN ZUM ABTRENNEN VON ZELLSTOFF UND ANDEREN ANHAFTENDEN STOFFEN BEIM RECYCLING VON ABFALLKUNSTSTOFF, INSBESONDERE MISCHKUNSTSTOFF**
METHOD FOR ISOLATING CELLULOSE AND OTHER ADHESIVE MATERIALS DURING THE RECYCLING OF WASTE PLASTICS, IN PARTICULAR MIXED PLASTICS
PROCÉDÉ POUR SÉPARER DE LA CELLULOSE ET D'AUTRES MATIÈRES ADHÉRENTES LORS DU RECYCLAGE DE DÉCHETS DE MATIÈRES PLASTIQUES, EN PARTICULIER D'UN MÉLANGE DE MATIÈRES PLASTIQUES

(30) Priorität: 17.11.2006 DE 102006054769; 17.11.2006 DE 102006054770
(43) Veröffentlichungstag der Anmeldung: 02.09.2009
(73) Patentinhaber: CVP Clean Value Plastics GmbH, 21614 Buxtehude (DE)
(72) Erfinder: HOFMANN, Michael, 21614 Bruxtehude (DE); GERCKE, Alexander, 23843 Bad Oldesloe (DE)
(74) Vertreter: Hauck Patent- und Rechtsanwälte
(86) Internationale Anmeldenummer: PCT/EP2007/009930
(87) Internationale Veröffentlichungsnummer: WO 2008/058750

(56) Entgegenhaltungen:
- EP-A- 0 515 946
- WO-A-2006/100044
- JP-A- 6 106 536
- JP-A- 57 036 616
- JP-A- 2003 305 724

## Beschreibung

Die Erfindung bezieht sich auf ein Verfahren nach dem Patentanspruch 1.

Aus WO 2006/100044 ist ein Verfahren zur Zerkleinerung und Reinigung von Abfallkunststoff, insbesondere Mischkunststoff, bekannt geworden, bei dem aus Folienschnipseln oder sonstigen Folienresten und zerhackten Kunststoffteilen ein Kompaktat bzw. ein Agglomerat hergestellt wird. Das Agglomerat reduziert drastisch das Volumen des Abfallkunststoffs und kann daher leicht transportiert werden. Es wird in diesem Zustand in großem Umfang für die Energieerzeugung eingesetzt. In dem bekannten Verfahren wird von der Erkenntnis ausgegangen, daß sich ein derartiges Kompaktat bzw. Agglomerat gut vermahlen läßt und das vermahlene Gut zur Weiterbehandlung und Veredelung sehr gut geeignet ist. Die Vermahlung geschieht in einem Scheiben- oder Trommelrefiner in Anwesenheit von Wasser. Der Anteil an Flakes und anderen Teilen beträgt mindestens 10% des Gesamtvolumens. An den Flakes anhaftende Stoffe werden weitgehend abgerieben und liegen als separate Stoffe vor. Von dem aus dem Refiner austretenden Mahlgut wird eine Feinkornfraktion entfernt. Das übrige Mahlgut wird gewaschen bzw. mechanisch entwässert und getrocknet. Durch weitere Aufbereitung kann ein derartiges Mahlgut als Roh- und/oder Füllstoff für Plattenwerkstoffe, als Füllstoff für die verschiedensten Anwendungen und bei entsprechendem Reinigungsgrad auch mit Reinkunststoff oder Kunststoffen aus Sortierungen zur Herstellung von Kunststoffteilen verwendet werden. Ein weiteres Anwendungsgebiet ist die Herstellung von sogenannten WPC-Teilen (Wood Plastic Composites). Bei der Herstellung derartiger Teile wird eine Mischung aus Holz- und Kunststoffpartikeln entweder durch Trockenmischung und direkte Verarbeitung oder durch Compoundierung mit Hilfe eines Extruders, eines Agglomerators, eines Heizmischers oder eines Heizkühlmischers hergestellt und zu Formteilen verarbeitet.

Abfallkunststoff enthält naturgemäß einen nicht unbeträchtlichen Anteil an Verunreinigungen und Anhaftungen, insbesondere Zellstoff, der für viele Anwendungsgebiete unbrauchbar ist. Dieser Zellstoff hat seine Herkunft in Klebeetiketten, aus Verbundverpackungen oder aus unvollständigen Abtrennungen von freien Papier. Bei Kunstoffen aus Altpapiersammlungen haften häufig größere Mengen an Zellstoff an den Kunststoffen. Bei der Kompaktierung ist der Zellstoff eingeschmolzen bzw. verkapselt und gelangt dadurch in den Mahlprozeß. Auch nach der Aufmahlung ist Zellstoff noch in einzelnen Körnen oder Teilchen des Mahlguts eingebunden oder haftet weiterhin an den Körnern oder Teilchen des Mahlguts. Wird Kunststoff zusammen mit Zellstoff in einem Extruder verarbeitet oder in einer Spritzgießmaschine, führt die Feuchtigkeit des Zellstoffs zu Wasserdampfentwicklung, welche eine Verarbeitung erschwert oder gar unmöglich macht. Zellstoff im aufgemahlenen Zustand hat außerdem den Nachteil, daß er hydroskopisch wirkend Feuchtigkeit anzieht, die während eines Trocknungsprozesses gegebenenfalls länger anhält als im Kunststoffmaterial.

EP 515946 offenbart ein Verfahren zum Abtrennen von Textilfasern von Abfallkunststoff, bei welchem das zerkleinerte Gut zusammen mit Wasser in einem Scheibenrefiner eingetragen wird, ohne vorher ein Kompaktat bzw. Agglomerat aus den Flakes und den Teilchen herzustellen.

JP 2003 305 724 offenbart ein Verfahren zum Abtrennen von Lackschichten von Abfallkunststoff, bei welchem das zerkleinerte Gut zusammen mit einem Lösungsmittel zu einem Scheibenrefiner eingetragen wird, ohne vorher ein Kompaktat oder Agglomerat aus Flakes oder Teilchen herzustellen.

Das Kompaktieren bzw. Agglomerieren ist ein Prozeß, der einen hohen apparativen Energieaufwand erfordert und somit sehr kostenintensiv ist. Außerdem steht Agglomerat nicht immer zur Verfügung.

Der Erfindung liegt daher die Aufgabe zugrunde, ein Verfahren zum Abtrennen von Zellstoff und anderen anhaftenden Stoff beim Recycling von Abfallkunststoff, insbesondere Mischkunststoff, anzugeben, das den Energie- und Apparateaufwand verringert.

Diese Aufgabe wird durch die Merkmale des Patentanspruchs 1 gelöst.

Bei dem erfindungsgemäßen Verfahren wird gegebenenfalls vorsortierter Abfallkunststoff mechanisch zu Flakes aus Folien oder Stücken aus dickeren Kunststoffteilen bis zu einer vorgegebenen Größe zerkleinert, wobei Übergrößen aussortiert werden. Aus gesammeltem Abfall wird üblicherweise Kunststoff aussortiert und mit Hilfe eines Schredders oder ähnlicher Zerkleinerungsgeräte zerkleinert, damit er z.B. dem Kompaktierprozeß zugeführt werden kann. Es ist auch bekannt, eine Vorsortierung auf manuelle oder automatische Weise nach einzelnen Kunststoffarten vorzunehmen. So ist z.B. die Wiederaufbereitung bzw. Wiederverwendung von PVC oder auch PET zusammen mit anderen Kunststoffarten problematisch. Bei dem erfindungsgemäßen Verfahren wird der Abfallkunststoff mechanisch soweit zerkleinert, daß die Teile eine bestimmte Größe nicht überschreiten. Übergrößen werden aussortiert und gegebenenfalls erneut dem Zerkleinerungsprozeß unterworfen.

Das auf diese Weise zerkleinerte Gut wird ohne vorhergehende Kompaktierung einem Scheibenrefiner zugeführt. Dessen zusammenwirkende Scheiben, die vorzugsweise einen Abstand haben, der etwa der Dicke der Flakes ohne anhaftende Stoffe entspricht, reiben die Stoffe weitgehend vollständig von den Flakes ab.

Bei der Bearbeitung im Scheibenrefiner wird der außerordentlich große Vorteil erzielt, daß an den Kunststoffflakes anhaftender Zellstoff, der beispielsweise von Etiketten stammt, gänzlich abgerieben wird. Dies trifft auch auf andere anhaftende Fremdstoffe zu, insbesondere für den Kleber der Etiketten, der normalerweise nicht wasserlöslich ist. Somit liegt der Zellstoff separat im Ausgangsgut des Scheibenrefiners vor. Dies ist bei der Aufmahlung von Kompaktat oder Agglomerat in einem Refiner, auch in einem Zahnscheibenrefiner, zumeist nicht der Fall. Im Kompaktat bzw. Agglomerat ist der Zellstoff eingekapselt bzw. verhakt und haftet auch nach dem Vermahlen an bzw. in den Kunststoffkörnern. Erst durch eine feine Vermahlung, etwa in einer weiteren Mahlstufe, ist es hierbei möglich, Zellstoffteilchen von Kunststoffteilchen zu trennen, so daß im Anschluß eine Separierung durch geeignete Verfahren, beispielsweise Windsichtverfahren, möglich ist.

Anstelle eines Scheibenrefiners ist es erfindungsgemäß möglich, einen Trommelrefiner zu verwenden.

Bei der Erfindung liegt der Zellstoff nach dem Durchgang der Flakes im Scheibenrefiner in separater Form vor, und der abgetrennte Kunststoff kann den Prozeß weiter durchlaufen, d.h. weitere Vermahlungs- und Entwässerungsstufen, wie aus dem eingangs beschriebenen Verfahren bekannt. Allerdings ist bei der Erfindung ein deutlich geringerer Zerkleinerungsgrad für die Vermahlung des Kunststoffs ausreichend, weil der Zellstoff ohnehin getrennt vom Kunststoff vorliegt. Er kann durch geeignete Separierungsmethoden abgetrennt werden. Somit ist die Entfernung des Zellstoffs aus dem Kunststoffabfall wesentlich unaufwendiger als bei herkömmlichen Verfahren.

Mit Hilfe der Erfindung kann somit auch die Schmutzfracht, die mit dem Kunststoff durch den Scheibenrefiner hindurch gelangt, auf einfache Weise aus dem Prozeß ausgeschleust werden, z.B. durch Absiebung des Feinanteils.

Bei der Verwendung eines Zahnscheibenrefiners sind die Zähne beabstandet auf konzentrischen Kreisen angeordnet, wobei die Lücken zwischen den Zähnen eines Kreises und der Abstand der Refinerscheiben voneinander so groß sind, daß die Flakes oder Stücke bzw. das bis dahin gemahlene Gut frei hindurchtreten kann. Da die Zerkleinerung der Flakes und der Stücke von innen nach außen erfolgt, mit einer kontinuierliche Zerkleinerung von innen nach außen, hat das Gut naturgemäß im äußeren Bereich zwischen den Zahnscheiben geringere Abmessungen, als im Bereich der Zuführöffnung in der Achse des Refiners. Dementsprechend kann der Abstand der Zähne auf den Kreisen und der Abstand der Mahlscheiben von innen nach außen kleiner werden. Daher gilt, daß der Abstand sehr wichtig ist, weil trotz Anwesenheit von Wasser sonst die Gefahr besteht, daß sich stückiger Kunststoff im Refiner festsetzt und diesen binnen kurzem verstopft.

Zahnscheibenrefiner sind an sich bekannt. Sie werden zum Dispergieren von Zellstoff verwendet, wie es etwa bei der Aufbereitung von Altpapier anfällt. Der Zellstoff wird in einer Suspension in den Zahnscheibenrefiner gegeben, wobei das Material zunächst in einer sogenannten Walkzone im Einlaufbereich bearbeitet wird, bevor es zu den Zahnreihen strömt. Zum Zerkleinern von nicht kompaktierten Flakes oder sonstigen Kunststoffstücken und dem Entfernen von anhaftendem Zellstoff sind Zahnscheibenrefiner bisher nicht eingesetzt worden. Zahnscheibenrefiner sollen bei ihrem bisherigen Einsatzzweck Papierfasern vereinzeln und nicht mahlen. Die Fasern sollen bei der Dispergierung so wenig wie möglich geschädigt werden.

Nach einer anderen Ausgestaltung der Erfindung kann das Ausgangsgut nach dem mechanischen Entwässern und gegebenenfalls Entfernen von Feinanteilen in einen Schwimmsinkbehälter eingetragen werden, in dem eine Trennung des Zellstoffs und Teilchen mit einem spezifischen Gewicht > 1 und Kunststoffteilen mit einem spezifischen Gewicht < 1 erfolgt. Dieses Verfahren hat den Vorteil, daß z.B. PVC oder PET, die ein größeres spezifisches Gewicht als 1 haben, zusammen mit dem Zellstoff absinken, während die übrigen Kunststoffteilchen aufschwimmen und abgeschöpft werden können.

Nach einer anderen Ausgestaltung der Erfindung kann das Ausgangsgut auch einem Sieb zugeführt werden, in welchem durch Unterdruck die Zellstoffsuspension vom übrigen Ausgangsgut entfernt wird. Ferner kann eine Siebvorrichtung nach US 2004/0050510 A1 eingesetzt werden, wobei jedoch vorliegend der Filterkuchen von Kunststoffteilchen gebildet ist, während Zellstoff durch das Trommelsieb hindurchtritt. Schließlich kann das Ausgangsgut nach mechanischer Entwässerung einer Sortierzentrifuge zugeführt werden, in der eine Sortierung nach der Dichte erfolgt.

Generell kann sich bei der Ausschleusung des Zellstoffes zunutze gemacht werden, dass bei Vorhandensein von Folienflakes mit Etikettenbeklebungen sich nach dem Durchlaufen des Scheibenrefiners der Zellstoff praktisch vollständig vom Kunststoff abtrennt und in Dispersion mit einer gleichmäßigen Stoffkonsistenz geht. In Folge der geometrischen Größenunterschiede der dispergierten Zellstoffe und der Folienflakes lässt sich nahezu jede Nasssiebung anwenden, die die Folienflakes zurückhält und die Zellstoffdispersion durchlässt. Dichtesortierungen kommen dann zum Zuge, wenn andere Kunststoffe wie z. B Hartkunststoffe im Scheibenrefiner zu feinen Körnern gemahlen werden und somit eine geometrische Trennung nicht mehr zum Zuge kommt.

Es wurde bereits erwähnt, daß mit Hilfe eines Scheibenrefiners der angegebenen Art die Wirkung erzielt wird, daß anhaftende Zellstoffe und sonstige Stoffe von Kunststoffen abgetrennt bzw. abgeschert werden. Damit lassen sich herkömmliche Methoden vermeiden, Folien mit Zellstoffanhaftungen in Trockenprozessen aufwendig vom Zellstoff zu entfrachten oder über einen Friktionswäscher gehen zu lassen, der einen wirtschaftlich nicht verwertbaren Zellstoffabfall produziert. Bei den Waschmethoden nach dem Stand der Technik ist zudem häufig die Abtrennung der Zellstoffe von den Kunststoffen von der Trennwirkung unbefriedigend, da durch vorhandenen Kleber für Etiketten immer Zellstoffreste am Kunststoff verbleiben. Bei der Erfindung wird der Zellstoff vom Kunststoff schon nach einer ersten Refinerstufe praktisch vollständig abgetrennt und braucht den gesamten Verarbeitungsprozeß des Kunststoffs nicht zu durchlaufen. Für die Herstellung von Rohstoffen für Wood Plastic Composites kann es vorteilhaft sein, den abgetrennten Zellstoff den Prozess zusammen mit den Kunststoffen durchlaufen zu lassen und diese im Trockner ebenfalls zusammen zu belassen. Auf diese Weise wird ein sehr homogenes und gut durchmischtes Stoffgemisch erzeugt, das im Anschluss ggf. unter Zugabe von Additiven und/oder anderen Kunststoffen mit geeigneten Maschinen wie z. B. einem Palltruder zu einem Dry Blend geliert wird oder sogar mit Heiz- oder Heizkühlmischem oder mit Extrudern compoundiert wird. Wird hingegen der Zellstoff vorher abgetrennt, kann der gereinigte und gegebenenfalls sortierte Kunststoff in einem Extruder regranuliert werden.

Das erfindungsgemäße Verfahren kann auch wiederholt werden. Das Ausgangsgut aus dem Scheibenrefiner kann ganz oder teilweise (z.B. zu 30 %) unmittelbar zum Eingang des Refiners zugeführt werden. Bei der Erfindung kann auch lose kompaktiertes Material, wie z.B. Siebmatrizenpellets als Eingangsmaterial für den Scheibenrefiner verwendet werden. Hier wird ein Verbund in den Pellets nur durch Verkrallung bzw. leichtes Anschmelzen der Teilchen im Randbereich erreicht. Dies führt dazu, daß sich Flakes herauslösen und Zellstoffanhaftungen an diesen Flakes diese wirksam abgerieben werden.

Wie ebenfalls schon erwähnt, werden beim erfindungsgemäßen Verfahren die Flakes aus dem Abfallkunststoff im Scheibenrefiner relativ wenig zerkleinert. Daher ist es möglich, die Flakes z.B. durch geeignete Sortierverfahren nach Kunststoffarten zu sortieren. Es ist auch möglich, sie vom körnigen Gut zu trennen.

Bei der Trocknung in einem Wirbelschicht- oder Flugschichttrockner kommt es zu einer Separation der leichten Flakes in den Filter, während die körnigen Hartkunststoffe aus dem Trockner ausgetragen werden. So macht man sich den Windsichtungseffekt in diesem speziellen Trocknertyp zunutze, um leichte Folienschnipsel von körnigen Kunststoffteilchen zu trennen. Diese haben einen unterschiedlichen Melting-Flow-Index (MFI), so daß sich unterschiedliche Regranulattypen ergeben. Da Flakes und Körner getrennt vorliegen und zellstofffrei sind, ist es möglich, sie in Kunststoffarten zu sortieren. Die hierfür einzusetzenden Trennmethoden sind bekannt. Wenn weiter Flakes und/oder Körner nach Kunststoffarten sortiert werden, ist die Erzeugung reiner Kunststoffgranulate möglich.

Falls ausreichend, kann das gegebenenfalls vom Zellstoff befreite Mahlgut unmittelbar in bestimmten Weiterverarbeitungsprozessen eingesetzt werden, beispielsweise bei der Herstellung von Kunststoffteilen, Wood Plastic Composites oder dergleichen. Falls jedoch ein homogeneres Produkt erwünscht ist, kann der Mahlprozeß nach der Erfindung wiederholt oder in einer weiteren Refinerstufe fortgeführt werden.

Aus dem Mahlgut wird außerdem zweckmäßigerweise mit dem Prozeßwasser die Feinanteilfracht entfernt, die nicht nur Feinanteile an Kunststoff, sondern auch organische Bestandteile oder sonstige Schmutzfracht enthält, das den Flakes oder sonstigen Kunststoffteilen noch anhaftet bzw. mit diesen vermischt ist. Das Prozeßwasser kann entweder aufbereitet, gegebenenfalls nach einer Feinabsiebung der Feinanteile oder nach Absiebung der Feinanteile in den Prozeß zurückgeführt werden.

Erfolgt die Entfernung des Zellstoffs erst im Windsichtverfahren, läßt sich nicht vermeiden, daß eine Kunststoffeinfraktion im Zellstoff enthalten ist. Das Sieb- bzw. Filtergut kann jedoch gut weiterverwendet werden. Feine Kunststoffe, vor allem polyolefiner Herkunft oder Herkunft aus Polyester (PET), ergeben zusammen mit Zellstoff einen sehr gut nutzbaren Werkstoff für die Herstellung sogenannter Wood Plastics Composites (WPC). Das Kunststofffasergemisch wird z.B. über einen Agglomerator in Granulatform gebracht oder direkt auf einen Doppelbandkalander gestreut. Eine andere Möglichkeit ist die Compoundierung z.B. in einem Spezialextruder mit Entgasungsvorrichtung und ggf. Zugabe von Additiven wie z.B. Maleinsäureanhydrit. Auch Reinkunststoffe virginer Herkunft, Reaktorware oder hochwertige Kunststoffe aus der Kunststoffartensortierung können beigemischt werden, um gezielte Verarbeitungsqualitäten zu erzeugen. In diesem Fall wird durch diese Anwendung eine Faservergütung des Kunststoffs erzeugt, so daß die Beimischung von Holzspänen und -fasern reduzierbar oder sogar verzichtbar ist. Damit entfällt für die Herstellung von WPC die Aufbereitung von Holzspänen oder -fasern, was zu großen wirtschaftlichen Einsparungen führt. Ein weiterer wirtschaftlicher Effekt liegt auf dem Entsorgungssektor, bei dem sonst hohe Kosten für die Entsorgung des Zellstoffs anfallen.

Die Anwendung eines herkömmlichen Zahnscheibenrefiners, wie er bekanntermaßen zum Dispergieren von Zellstoffen aus Altpapier eingesetzt wird, ist bei der Erfindung grundsätzlich möglich. Er bedarf jedoch gewisser Modifikationen, wie sich bereits aus den obigen Angaben ableiten lässt, um den gewünschten Nutzen zu erzielen, nämlich eine Zerkleinerung mit gleichzeitiger Ablösung von Anhaftungen wie Schmutz und/oder Zellstoff. In einer Ausgestaltung der Erfindung hierzu ist von der zentralen Zuführöffnung ausgehend die erste Zahnreihe in einem gewissen radialen Abstand zur Zuführöffnung angeordnet und bildet eine vorzugsweise flache Einlaufzone. In einer anderen Ausgestaltung der Erfindung ist vorgesehen, daß ein Zahnscheibenrefiner verwendet wird, bei dem der Abstand der Scheibenflächen von der zentralen Zuführöffnung ausgehend radial nach außen kontinuierlich abnimmt. Nach einer anderen Ausgestaltung der Erfindung kann ein Zahnscheibenrefiner verwendet werden, bei dem der radiale äußere Bereich der Scheiben radiale oder annähernd radiale in Drehrichtung beabstandete Rippen aufweist, wie sie übliche Scheibenrefiner, die zum Aufmalen von Kunststoffagglomeraten bekannt geworden sind, aufweisen. In diesem Zusammenhang können die Mahlrippen mit Barrieren versehen werden, derart, daß die vermahlten Körner zur benachbarten Scheibe hin gelenkt werden. Auf diese Weise wird eine noch wirksamere Vermahlung erreicht.

Schließlich kann bei dem erfindungsgemäßen Zahnscheibenrefiner vorgesehen werden, daß die Zahnscheibe von der mittigen Zuführung ausgehend im Umfangsabstand Kanäle enthält, die sich über eine gewisse Strecke nach außen erstrecken. Die Kanäle, die in ihrer Tiefe von innen nach außen abnehmen können, sind in jedem Falle so breit, daß sie den Eintritt des stückigen Kunststoffmaterials bzw. der -flakes ermöglichen.

Es sei noch bemerkt, daß bei dem Abreinigen des Zellstoffs im Scheibenrefiner auch eine Trennung von Verbundstoffen erfolgt, z.B. Aluminiumfolien von Kunststofflakes.

Die Erfindung wird nachfolgend anhand von Zeichnungen näher erläutert.
- Fig. 1: zeigt ein Anlagenschema zum Aufbereiten von Abfallkunststoff mit Hilfe einer Refinerstufe nach der Erfindung.
- Fig. 2: zeigt ein Anlagenschema zur Aufbereitung von Abfallkunststoff mit Hilfe von zwei Refinerstufen nach der Erfindung.
- Fig. 3: zeigt ein Anlagenschema über den Einsatz einer Zahnscheibenrefinerstufe nach der Erfindung im Anschluß an einen herkömmlichen Aufmahlprozeß.
- Fig. 4: zeigt die Draufsicht auf eine Scheibe eines Zahnscheibenrefiners zur Anwendung bei der Erfindung.
- Fig. 5: zeigt eine Abwandlung der Zahnscheibe nach Figur 4.
- Fig. 6: zeigt perspektivisch die Zahnscheibe nach Fig. 5.
- Fig. 7: zeigt schematisch das Trocknen und Windsichten am Ende des Aufmahlprozesses von Abfallkunststoff.
- Fig. 8: zeigt schematisch einen Teilschnitt durch eine Zahnscheibe gemäß Fig. 4.

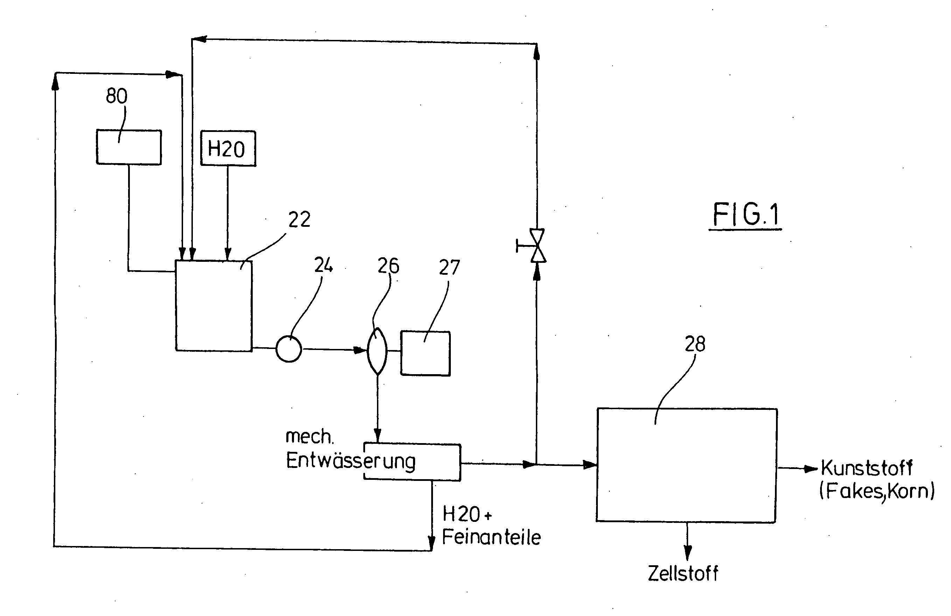

In Fig. 1 ist ein Zahnscheibenrefiner 26 angedeutet, der weiter unten im Einzelnen beschrieben wird. Er wird von einem Motor 27 angetrieben. Aus einem Vorrat 80 werden Kunststoffflakes und andere Kunststoffstücke in einen Behälter 22 mit Wasser eingetragen. Die Kunststoffflakes und Kunststoffstücke sind Ergebnis einer Vorzerkleinerung und gegebenenfalls Vorsortierung. Üblicherweise liegt aus Abfall aussortierter Abfallkunststoff in Form von gepreßten Ballen vor.

Vor dem Pressen zu Ballen oder auch danach erfolgt mit Hilfe einer Schwergutfalle eine Aussonderung von mineralischen Bestandteilen und Metallen. Ebenfalls kann eine Ausschleusung von freiem Papier erfolgen. Außerdem kann eine Sortierung nach Kunststoffarten über zum Beispiel eine infrarotgestützte Erkennungssensorik mit nachgeführter Ausschleusung von identifizierten Kunststoffen stattfinden. Wahlweise kann eine Ausschleusung nur von unerwünschten Kunststoffen stattfinden. Die Kunststoffabfälle aus den geöffneten Ballen werden zerkleinert, wobei sich durch die Zerkleinerung aus Folien Flakes ergeben und Stücke bei dreidimensionalen oder dickeren Kunststoffteilen. Diese Zerkleinerung erfolgt in einem Schredder oder einem Scheibenzerhacker. Eine auf diese Weise hergestellte Fraktion muß so abgestimmt sein, daß kein sogenanntes Überkorn entsteht, das die Annahmekriterien für die Einspeisung in den Refiner 26 nicht erfüllt. Zu diesem Zweck ist daher nach Bedarf eine Überkornabsiebung vor allem des stückigen Gutes zu installieren, wobei das Überkorn ggfs. über die Zerkleinerungsapparatur zurückgeführt oder auch ausgeschleust wird.

Die Kunststoffflakes und -Stücke im Behälter 22 werden mit Wasser von einer Feststoffpumpe 24 dem Refiner 26 zugeführt, der - wie erwähnt - ein sogenannter Zahnscheibenrefiner ist. Er ist in der Lage, von den Kunststoffflakes anhaftende Zellstoffe und Kleber durch Friktion abzutrennen und das härtere aufgegebene Gut körnig zu verkleinern. Der Mahlspalt ist so eingestellt, daß die Flakes im wesentlichen unzerkleinert passieren, aber anhaftende Stoffe abgerieben oder abgeschert werden. Das Ausgangsgut wird anschließend mechanisch entwässert, zum Beispiel mit Hilfe einer Zentrifuge oder dergleichen. Das Prozeßwasser wird mit Feinanteilen, die auch Schmutzfracht umfassen können, in den Behälter 22 rückgeführt. Alternativ werden die Feinanteile abgesiebt, bevor das Prozeßwasser rückgeführt wird. Alternativ kann das abgesiebte Prozeßwasser auch einer Aufbereitung zugeführt werden.

Das Mahlgut gelangt in eine Vorrichtung 28, in der Zellstoff vom Kunststoff getrennt wird. Der Zahnscheibenrefiner 26 hat die Eigenschaft, an Flakes anhaftendes Zellstoffmaterial wirksam abzureiben, so daß der Zellstoff separat im Mahlgut in Form einer Suspension vorliegt. Der Zellstoff, der mit Hilfe geeigneter Vorrichtungen separiert wird, wird ggfs. einer weiteren Verarbeitung zugeführt. Als Separiervorrichtungen dienen zum Beispiel ein herkömmliches Sieb, ein Sieb, durch das die Zellstoffsuspension hindurchgesaugt wird, eine Sortierzentrifuge oder auch eine Schwimmsinkanordnung, wie sie an sich bekannt ist. Das vom Zellstoff befreite Kunststoffmaterial in Form von Flakes und Körnern kann einer weiteren Behandlung zugeführt werden. Es kann weiter aufgemahlen werden, wie aus dem eingangs beschriebenem Verfahren bekannt oder auch unmittelbar einer Verwendung zugeführt werden, ggfs. nach anderen Aufbereitungsmaßnahmen.

Eine Trennung des Zellstoffs vom Kunststoff kann auch unmittelbar aus der Suspension am Ausgang des Refiners stattfinden, vorzugsweise mit den oben angegebenen Mitteln. Eine Entwässerung des Kunststoffanteils ist je nach Anwendung der Trennmethode erforderlich.

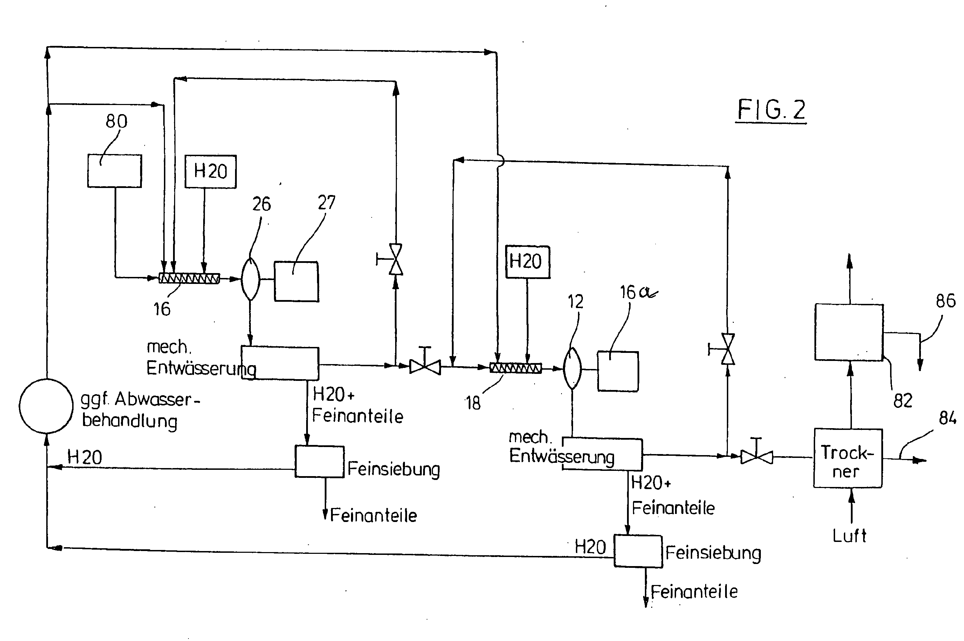

Bei dem Anlagenschema nach Figur 2 ist wieder bei 80 ein Vorrat an Flakes und stückigem Kunststoff vorgesehen, wie in Verbindung mit Figur 1 bereits beschrieben. Im gezeigten Fall werden die Flakes und Kunststoffstücke über eine Förderschnecke 16 dem Zahnscheibenrefiner 26 zugeführt. In der mechanischen Entwässerung, beispielsweise mit Hilfe einer Zentrifuge, werden Prozeßwasser und Feinanteile entfernt und feingesiebt, wobei das Prozeßwasser einer Abwasserbehandlung zugeführt wird und von dort zurück zur Förderschnecke 26, in die auch Frischwasser eingetragen werden kann, sodaß in den Zahnscheibenrefiner überwiegend Wasser und zu einem Bruchteil Kunststoffmaterial eingetragen wird, z.B. zu mindestens 10 % des Gesamtvolumens.

Das entwässerte Mahlgut kann über die Förderschnecke 16 zurück in den Zahnscheibenrefiner eingetragen werden, um eine erneute Zerkleinerung zu bewerkstelligen. Alternativ kann es über eine Förderschnecke 18 in einen weiteren Refiner 12, der von einem Motor 16a angetrieben ist, eingetragen werden. Der Refiner 12 kann ein Zahnscheibenrefiner sein oder auch ein anderer Scheibenrefiner mit Mahlrippen, wie er in Verbindung mit dem eingangs erwähnten Verfahren bekannt geworden ist. Das Ausgangsgut aus dem Refiner 12 wird wiederum mechanisch entwässert, beispielsweise mittels einer Zentrifuge. Prozeßwasser mit Feinanteilen gelangt in eine Feinsiebung, wobei das Prozeßwasser zur Abwasserbehandlung geleitet wird, wie bereits auch zur ersten Stufe beschrieben. Auch der Prozeß in der zweiten Refinerstufe kann rezirkuliert werden, wie durch die Leitung angedeutet. Das entwässerte Ausgangsgut, das einen gewissen Feinheitsgrad aufweist, gelangt in einen Trockner. Es handelt sich um einen Lufttrockner, der gleichzeitig als Windsichter dient. Das mit der Trocknungsluft ausgetragene Material gelangt in eine Sieb- oder Filtervorrichtung 82. Das Sieb- bzw. Filtergut kann einer geeigneten Verwendung zugeführt werden, beispielsweise der Herstellung von Wood Plastic Composites, wie weiter oben bereits beschrieben. Das vom Zellstoff und Feinmahlgut befreite übrige Gut wird über 84 dann seiner weiteren Verwendung zugeführt. Es sei noch erwähnt, daß die Zellstoff-/Kunststofffraktion aus der Siebvorrichtung oder der Filtervorrichtung, wie sie bei 86 ausgetragen wird, noch einer weiteren Trocknung, beispielsweise in einem Flugschichttrockner, unterworfen werden kann. Wenn der Zellstoff durch eine vorhergehende Trennung weitgehend entfernt worden ist, kann das Eingangsgut des Trockners in Flakes und körniges Gut getrennt werden. Die Flakes sammeln sich im Filter, und das körnige Gut wird aus dem Trockner heraus befördert.

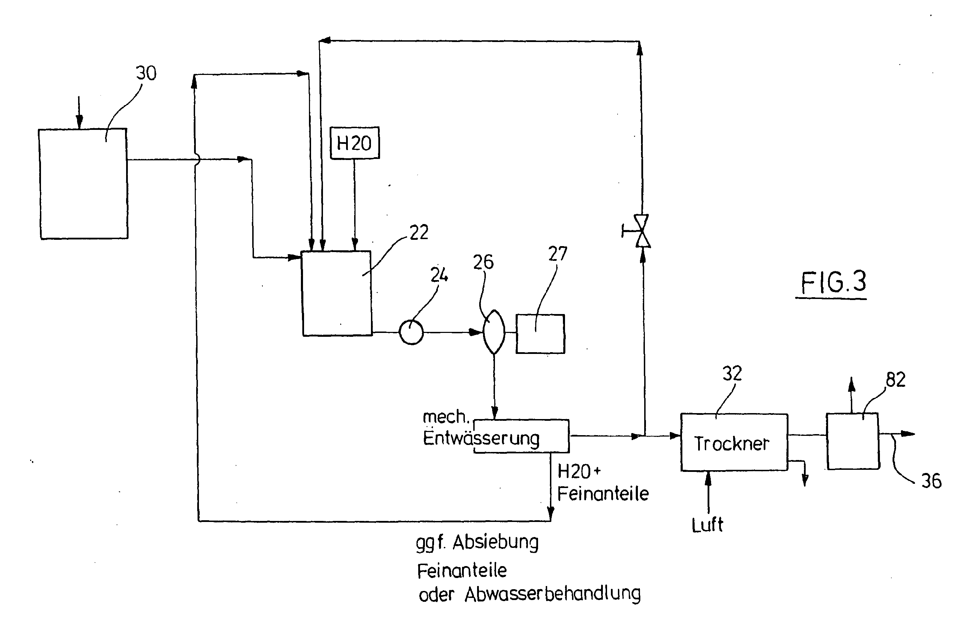

In Figur 3 sind Teile des Anlagenschemas aus dem Anlagenschema nach Figur 1 oder 2 entnommen. Daher sind gleiche Teile mit gleichen Bezugszeichen versehen. Die Besonderheit bei Figur 3 besteht darin, daß relativ loses Kompaktat als Ausgangsmaterial verwendet wird. Das Ausgangsgut aus Reservoir 30 wird in den Wasserbehälter 22 eingegeben und von dort über die Feststoffpumpe dem Zahnscheibenrefiner 26 zugeführt, der die Flakes reinigt und Stücke aus dickeren Kunststoffteilen zerkleinert. Der Trocknungsprozeß und die Abtrennung von Zellstoff gleicht dem Prozeß, wie er anhand von Figur 2 beschrieben wurde. Daher soll hierauf im Einzelnen nicht mehr eingegangen werden.

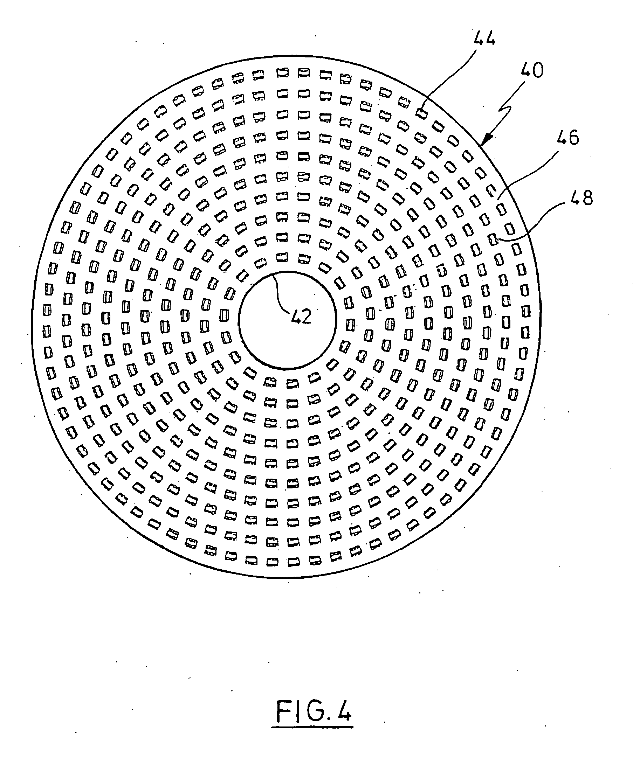

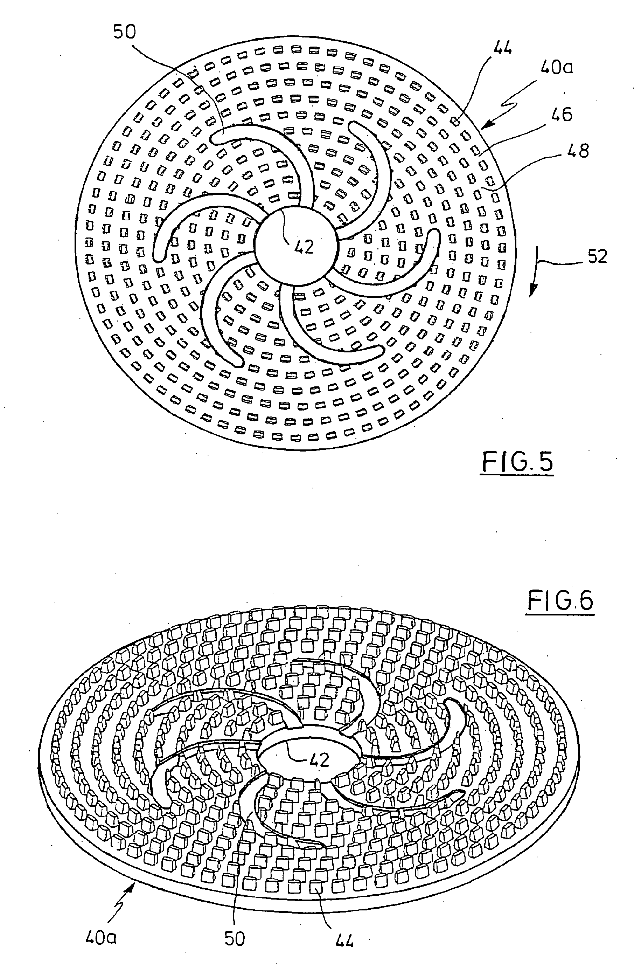

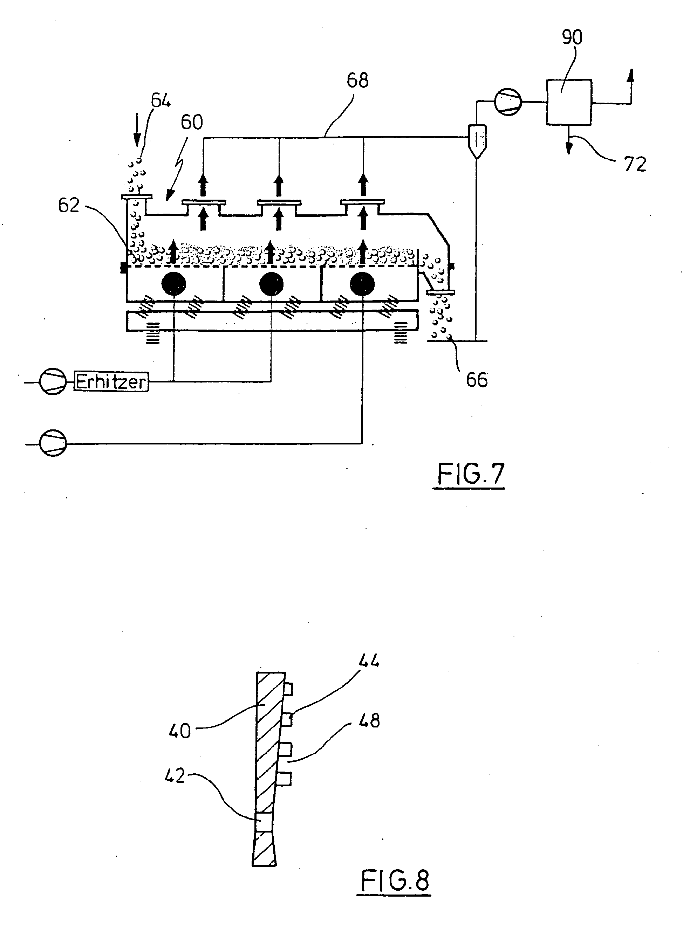

Anhand der Figuren 4 bis 6 und 8 sollen Einzelheiten des Zahnscheibenrefiners 26 nach den Figuren 1 bis 3 erläutert werden. In Figur 4 ist eine Draufsicht auf eine Scheibe 40 des Zahnscheibenrefiners dargestellt. Im vorliegenden Fall ist es diejenige Scheibe eines Zahnscheibenpaars, über dessen mittige Öffnung 42 zu zerkleinerndes Gut herangeführt wird. Aus der Scheibe 40 sind in zehn Kreisen, die konzentrisch angeordnet sind, Zähne 44 geformt. Zwischen den Zähnen 44 ist die Scheibe 40 flach. Die Zähne, die unterschiedliche Formen haben können, haben auf einem Kreis jeweils einen Abstand 46 voneinander, der im gezeigten Fall annähernd gleich ist, jedoch von innen nach außen abnehmen kann. Zwischen den Kreisen haben die Zähne einen Abstand 48. Auch dieser kann von innen nach außen kleiner werden. Beim Mahlprozeß gelangt Wasser und zu zerkleinerndes Gut, nämlich Flakes und kleinere dreidimensionale Kunststoffstücke, über die Öffnung 42 in den Bereich zwischen zwei aneinanderliegenden Zahnscheiben, wobei die Zahnanordnung der zweiten Scheibe, die in Figur 5 nicht gezeigt ist, so angeordnet ist, daß die Zahnreihen ineinandergreifen können. Die Abstände 46, 48 und der Abstand zusammenwirkender Zahnscheiben ist so bemessen, daß das jeweilige zu mahlende Gut ungehindert hindurchtreten kann, sodaß Verstopfungen vermieden werden. Aus diesem Grunde können die Abstände 46, 48 und auch der Abstand zwischen zusammenwirkenden Zahnscheiben von innen nach außen abnehmen, weil das Korn des Gutes von innen nach außen zerkleinert wird. Dies ist in Figur 8 zu erkennen. Die Dicke der Zahnscheibe 40 nimmt von der Öffnung 42 nach außen stetig zu.

Die Zahnscheibe 40 nach Figur 5 unterscheidet sich von der nach Figur 4 dadurch, daß ausgehend von der Zufuhröffnung 42 etliche Kanäle 50 eingeformt sind, die annähernd Kreisbogenform haben, wobei die Krümmung derart ist, daß die Enden der Kanäle 50 in entgegengesetzte Drehrichtung zeigen, wie mit dem Pfeil 52 angedeutet ist. Die Kanäle 50 haben eine Breite, die geringfügig oder etwas größer ist als die Breite der größten Flakes oder Kunststoffstücke, die über die Zuführöffnung 42 zugeführt werden. Die Kanäle 50 haben angrenzend an die Zufuhröffnung 42 die größte Tiefe und nehmen in ihrer Tiefe allmählich ab, wobei sie am Ende in die Zahnscheibenfläche auslaufen. Das Ende liegt auf etwa halbem Radius der Zahnscheibe 40.

In Figur 7 ist schematisch ein Wirbelschichttrockner dargestellt, wie er etwa am Anschluß der Ausführungsform nach den Figuren 2 und 3 eingesetzt werden kann. Er ist insgesamt mit 60 bezeichnet. Ein längliches Gehäuse ist in Längsrichtung durch ein horizontales Sieb oder Gitter 42 unterteilt, das oben das zugeführte Mahlgut 64 trägt. Unterhalb des Siebes 62 wird von einem Erhitzer kommend warme Luft zugeführt. Im nächsten Drittel wird kalte Luft zugeführt. Das längliche Gehäuse wird in geeigneter Weise in Vibration versetzt, sodaß sich das Gut als Bett auf dem Sieb 62 von links nach rechts vorbewegt. Ein derartiger Wirbelschichttrockner ist an sich bekannt. Das getrocknete Gut gelangt bei 66 am rechten Ende aus dem Gehäuse des Wirbelschichttrockners und wird in entsprechenden Behältern aufgefangen. Das Eingangsgut 64 enthält Flakes und körnigen Kunststoff. Die Flakes werden über die Leitung 68 zu einem Sieb oder Filter 70 geleitet, wo sie aufgefangen werden. Die Siebfraktion wird über 72 zu einer weiteren Verarbeitung geführt, ggfs. nach einer weiteren Trocknung über z.B. einen Flugschichttrockner. Eine Weiterverarbeitung erfolgt z.B. durch Regranulierung. Korn- und Flakematerial können ihrerseits noch in Kunststoffarten getrennt werden, wobei an sich bekannte Trennmethoden verwendet werden.

Falls Zellstoff mit in das Eingangsmaterial 64 gelangt, wird dieser über das Sieb oder Filter 60 abgeschieden, während das gesamte gereinigte Kunststoffmaterial bei 66 in den Wirbelschichttrockner ausgetragen wird. In diesem Fall sind im Wirbelschichttrockner andere Trennbedingungen einzustellen als bei der Trennung Flakes von Kornmaterial.

Der veränderbare Abstand der Zahnscheiben ist an der Zufuhröffnung so groß, daß das Gut ohne Stockung eintreten kann.

## Patentansprüche

1. Verfahren zum Abtrennen von Zellstoff und anderen anhaftenden Stoffen von Abfallkunststoff beim Recycling aller Arten von Abfallkunststoff, insbesondere Mischkunststoff (MKS), bei dem Folien und Stücke aus dickeren Kunststoffteilen von ggfs. vorsortiertem Abfallkunststoff mechanisch zu Flakes oder Teilchen bis zu einer vorgegebenen Größe vorzerkleinert werden, wobei Übergrößen aussortiert werden, das zerkleinerte Gut zusammen mit Wasser in einen Scheibenrefiner eingetragen wird, ohne vorher ein Kompaktat bzw. ein Agglomerat aus den Flakes herzustellen, wobei der Anteil an Flakes und anderen Teilchen mindestens 10 % vom Gesamtvolumen beträgt, von den zusammenwirkenden Scheiben des Refiners an den Flakes anhaftende Stoffe weitgehend abgerieben werden und als separate Stoffe vorliegen und die abgeriebenen Stoffe durch ein geeignetes Trennverfahren von den Kunststoffteilchen getrennt werden.

2. Verfahren nach Anspruch 1, **dadurch gekennzeichnet, daß** die abgeriebenen Stoffe vorwiegend Zellstoff sind.

3. Verfahren nach Anspruch 1 oder 2, **dadurch gekennzeichnet, daß** entwässertes Ausgangsgut des Scheibenrefiners in einem Lufttrockner einer Windsichtung unterworfen wird, wobei entweder der Zellstoff vorher ausgeschleust wird oder zusammen mit den Flakes von körnigem Gut getrennt wird.

4. Verfahren nach Anspruch 3, **dadurch gekennzeichnet, daß** die getrockneten Flakes und Körner in einem Wirbelschichttrockner getrennt werden.

5. Verfahren nach Anspruch 3, **dadurch gekennzeichnet, daß** der Zellstoff mit der Trockenluft aus einem Lufttrockner, insbesondere Wirbelschicht- oder Flugschichttrockner, ausgetragen und in einem Sieb oder Filter aufgefangen wird.

6. Verfahren nach Anspruch 1 oder 2, **dadurch gekennzeichnet, daß** das Ausgangsgut nach dem mechanischen Entwässern und ggfs. Entfernen von Feinanteilen in einen Schwimmsinkbehälter eingetragen wird, in dem eine Trennung des Zellstoffs und Teilchen mit einem spezifischen Gewicht > 1 von Kunststoffteilchen mit einem spezifischen Gewicht < 1 durchgeführt wird oder die Trennschnitte über Salzlösung entsprechend nach Bedarf auf Dichtschnitte größer als 1 eingestellt werden.

7. Verfahren nach Anspruch 1 oder 2, **dadurch gekennzeichnet, daß** das Ausgangsgut nach dem mechanischen Entwässern und ggfs. Entfernen von Feinanteilen in eine Sortierzentrifuge eingetragen wird, in der Zellstoff- und Kunststoffteilchen voneinander getrennt werden.

8. Verfahren nach Anspruch 1 oder 2, **dadurch gekennzeichnet, daß** der Zellstoff aus dem Ausgangsgut durch geometrische Siebung getrennt wird, vorzugsweise mit einem Sieb, von welchem durch Unterdruck eine Zellstoffsuspension entfernt wird.

9. Verfahren nach Anspruch 1, **dadurch gekennzeichnet, daß** ein Zahnscheibenrefiner verwendet wird, dessen Scheiben ineinandergreifende Zähne aufweisen, die beabstandet auf konzentrischen Kreisen angeordnet sind, wobei die Lücken zwischen den Zähnen eines Kreises so groß sind, daß Stücke aus dickerem oder festem Material bzw. das bis dahin zermahlene Gut frei hindurchtreten können.

10. Verfahren nach Anspruch 1, **dadurch gekennzeichnet, daß** ein Messerscheibenrefiner verwendet wird, wobei der Abstand der Scheiben etwa der Dicke des Flakematerials ohne Anhaftung entspricht.

11. Verfahren nach Anspruch 1, **dadurch gekennzeichnet, daß** vor dem Eintrag in den Scheibenrefiner das vorzerkleinerte Gut mit Wasser in eine Auflösetrommel (Pulper) eingetragen wird und abgelöste Zellstoffasern separiert werden.

12. Verfahren nach einem der Ansprüche 1 bis 11, **dadurch gekennzeichnet, daß** der Abfallkunststoff oder die Flakes oder die Stücke größerer Dicke nach Kunststoffarten sortiert wird/werden und dem Scheibenrefiner vorsortierte Kunststoffarten zugeführt werden.

13. Verfahren nach einem der Ansprüche 1 bis 12, **dadurch gekennzeichnet, daß** aus dem Abfallkunststoff oder den Flakes oder dickeren Stücken unerwünschte Kunststoffarten aussortiert wird/werden.

14. Verfahren nach einem der Ansprüche 1 bis 13, **dadurch gekennzeichnet, daß** Flakes und/oder Körper aus dem getrockneten Ausgangsgut nach Kunststoffarten sortiert werden.

15. Verfahren nach einem der Ansprüche 1 bis 14, **dadurch gekennzeichnet, daß** das Ausgangsgut zumindest teilweise auf den Scheibenrefiner rückgeführt wird.

16. Verfahren nach einem der Ansprüche 1 bis 15, **dadurch gekennzeichnet, daß** lose kompaktiertes Material aus Abfallkunststoff in einem ersten Mahlprozeß in einem vorgeschalteten Scheibenrefiner zerkleinert wird und das Mahlgut des vorgeschalteten Refiners in einen weiteren Scheibenrefiner eingetragen und zerkleinert wird.

17. Verfahren nach einem der Ansprüche 1 bis 11, **dadurch gekennzeichnet, daß** das Ausgangsgut des Scheibenrefiners nach mechanischer Entwässerung einer weiteren Scheibenrefinerstufe zugeführt wird.

18. Verfahren nach einem der Ansprüche 4 bis 8 und 17, **dadurch gekennzeichnet, daß** das Ausgangsgut des zweiten Refiners ohne Entwässerung dem Trennprozeß zugeführt wird.

19. Verfahren nach einem der Ansprüche 1 bis 18, **dadurch gekennzeichnet, daß** bei Verwendung eines Zahnscheibenrefiners von der zentralen Zufuhröffnung ausgehend der erste Zahnkreis zur Bildung einer Einlaufzone in einem radialen Abstand zur Zufuhröffnung angeordnet ist.

20. Verfahren nach Anspruch 19, **dadurch gekennzeichnet, daß** die Scheibenfläche der Einlaufzone bis zum ersten Zahnkreis durchgehend flach ist.

21. Verfahren nach einem der Ansprüche 1 bis 20, **dadurch gekennzeichnet, daß** ein Zahnscheibenrefiner verwendet wird, bei dem der Abstand der Scheibenflächen von der zentralen Zuführöffnung ausgehend radial nach außen kontinuierlich abnimmt.

22. Verfahren nach einem der Ansprüche 1 bis 21, **dadurch gekennzeichnet, daß** ein Zahnscheibenrefiner verwendet wird, bei dem ein radial äußerer Bereich der Scheiben radiale oder annähernd radiale, in Drehrichtung beabstandete Mahlrippen aufweist.

23. Verfahren nach Anspruch 10 oder 22, **dadurch gekennzeichnet, daß** zwischen den Mahlrippen Barrieren angeordnet sind, derart, daß die zermahlten Körner und/oder Flakes zur benachbarten Scheibe hin gelenkt werden.

24. Verfahren nach einem der Ansprüche 1 bis 22, **dadurch gekennzeichnet, daß** ein Zahnscheibenrefiner verwendet wird ,bei dem in die Zahnscheiben von der mittleren Zuführöffnung ausgehend im Umfangsabstand der Zuführöffnung Kanäle eingeformt sind, die sich über eine gewisse Strecke nach außen erstrecken.

25. Verfahren nach Anspruch 24, **dadurch gekennzeichnet, daß** die Tiefe der Kanäle von innen nach außen abnimmt.

26. Verfahren nach Anspruch 24 oder 25, **dadurch gekennzeichnet, daß** die Kanäle bogenförmig sind, wobei das äußere Ende der bogenförmigen Kanäle entgegengesetzt zur Drehrichtung zeigt.

## Claims

1. A method for the removal of wood pulp and other adhering substances from waste plastics in the recycling of all types of waste plastics, of mixed plastics (MKS) in particular, in which foils and pieces from thicker plastic parts of if necessary pre-sorted waste plastics are mechanically pre-shredded into flakes or particles up to a preset size, wherein oversizes are sorted out, the shredded product is charged into a disc refiner together with water, without prior processing the flakes into a compactate or a agglomerate, wherein the proportion of flakes and other particles is at least 10% of the total volume, substances adhering on the flakes are rubbed down by the co-operating discs of the refiner to a large extent, and are then present as separate substances, and the substances rubbed down are separated from the plastic particles by a suitable separation method.

2. A method according to claim 1, **characterised in that** the substances which are rubbed down are predominantly wood pulp.

3. A method according to claim 1 or 2, **characterised in that** dewatered output product of the disc refiner is subjected to windsifting in an air dryer, wherein the wood pulp is either extracted previously or is separated from grainy material together with the flakes.

4. A method according to claim 3, **characterised in that** the dried flakes and grains are separated in a fluid bed dryer.

5. A method according to claim 3, **characterised in that** the wood pulp is discharged with the dry air of an air dryer, a fluid bed or dispersion dryer in particular, and collected in a sieve or filter.

6. A method according to claim 1 or 2, **characterised in that** after mechanical dewatering and if necessary removal of fine fractions, the output product is charged into a sink-float tank, in which a separation of the wood pulp and those particles having a specific gravity >1 from plastic particles having a specific gravity <1 is performed, or the separation cuts are set to density cuts greater than 1, according to necessity, by way of suitable salt solutions.

7. A method according to claim 1 or 2, **characterised in that** after mechanical dewatering and if necessary removal of fine fractions, the output product is charged into a sorting centrifuge in which wood pulp and plastic particles are separated from each other.

8. A method according to claim 1 or 2, **characterised in that** the wood pulp is separated from the output product by geometric sieving, preferably by a sieve from which a wood pulp suspension is removed by negative pressure.

9. A method according to claim 1, **characterised in that** a toothed disc refiner is used, whose discs comprise meshing teeth, which are arranged at a distance one from another in concentric circles, wherein the gaps between the teeth of a circle are sufficiently great to allow the free passage of pieces of thicker or solid material, or of the product already ground up to then, respectively.

10. A method according to claim 1, **characterised in that** a cutter disc refiner is used, wherein the distance of the discs approximately corresponds to the thickness of the flake material without adhering substances.

11. A method according to claim 1, **characterised in that** before charging it into the disc refiner, the pre-shredded material is charged with water into a slushing drum (pulper), and removed wood pulp fibres are separated.

12. A method according to any one of claims 1 to 11, **characterised in that** the waste plastics or the flakes or the pieces having greater thickness is/are sorted according to the type of plastics, and pre-sorted types of plastics are supplied to the disc refiner.

13. A method according to any one of claims 1 to 12, **characterised in that** undesired types of plastics are sorted out from the waste plastics or the flakes or the pieces having greater thickness.

14. A method according to any one of claims 1 to 13, **characterised in that** flakes and/or bodies of the dried output product are sorted according to the type of plastics.

15. A method according to any one of claims 1 to 14, **characterised in that** the output product is at least partially recycled to the disc refiner.

16. A method according to any one of claims 1 to 15, **characterised in that** loosely compacted material of waste plastics is shredded in a preceding disc refiner in a first grinding process, and the ground product of the preceding refiner is charged into a further disc refiner and shredded there.

17. A method according to any one of claims 1 to 11, **characterised in that** the output product of the disc refiner is supplied to a further disc refiner stage after mechanical dewatering.

18. A method according to any one of claims 4 to 8 and 17, **characterised in that** the output product of the second refiner is supplied to the separation process without dewatering.

19. A method according to any one of claims 1 to 18, **characterised in that** when using a toothed disc refiner, the first tooth circle starting from the central supply opening is arranged in a radial distance from the supply opening, in order to form an intake zone.

20. A method according to claim 19, **characterised in that** the disc area of the intake zone is persistently flat up to the first tooth circle.

21. A method according to any one of claims 1 to 20, **characterised in that** a toothed disc refiner is used in which the distance of the disc areas decreases radially towards the outside continuously, starting from the central supply opening.

22. A method according to any one of claims 1 to 21, **characterised in that** a toothed disc refiner is used in which a radially outer region of the discs comprises radial or approximately radial grinding segments, spaced apart in the rotational direction.

23. A method according to claim 10 or 22, **characterised in that** barriers are arranged between the grinding segments, such that the ground grains and/or flakes are directed towards the neighbouring disc.

24. A method according to any one of claims 1 to 22, **characterised in that** a toothed disc refiner is used in which channels are formed into the toothed discs, starting from the central supply opening in the perimeter distance of the supply opening, which extend towards the outside over a certain path.

25. A method according to claim 24, **characterised in that** the depth of the channels decreases from the inside towards the outside.

26. A method according to claim 24 or 25, **characterised in that** the channels are arc-shaped, wherein the outer end of the arc-shaped channels points opposite to the rotational direction.

## Revendications

1. Procédé pour séparer de la cellulose et d'autres matière adhérentes de déchets de matières plastiques lors du recyclage de tous types de déchets de matières plastiques, en particulier d'un mélange de matières plastiques (MKS), lors duquel des films et morceaux de parties en matières plastiques plus épaisses de déchets de matières plastiques éventuellement triés au préalable sont fractionnés mécaniquement au préalable en pastilles ou particules jusqu'à une taille prédéterminée, dans lequel les dimensions surélevées sont extraites, le produit fractionné est inséré avec de l'eau dans un raffineur à disques sans fabriquer au préalable un compactat ou un agglomérat à partir des pastilles, dans lequel la proportion de pastilles et autres particules se monte à au moins 10 % du volume total, les matières adhérentes aux pastilles sont broyées en grande partie par les disques coopérants du raffineur et sont présentes en tant que matières séparées et les matières broyées sont séparées par un procédé de séparation approprié de particules de matières plastiques.

2. Procédé selon la revendication 1, **caractérisé en ce que** les matières broyées sont principalement de la cellulose.

3. Procédé selon la revendication 1 ou 2, **caractérisé en ce que** le produit de départ déshydraté du raffineur à disques est soumis à un triage par le vent dans un séchoir à air, dans lequel la cellulose est exfiltrée au préalable ou est séparée avec les pastilles du produit granuleux.

4. Procédé selon la revendication 3, **caractérisé en ce que** les pastilles et grains séchés sont séparés dans un séchoir en lit fluidisé.

5. Procédé selon la revendication 3, **caractérisé en ce que** la cellulose est évacuée avec l'air sec d'un séchoir à air, notamment séchoir en lit fluidisé ou tourbillonnaire, et capturée dans un tamis ou filtre.

6. Procédé selon la revendication 1 ou 2, **caractérisé en ce que** le produit de départ est inséré dans un récipient à flottation gravimétrique après la déshydratation mécanique et éventuellement l'élimination de particules fines, dans lequel une séparation de la cellulose et des particules avec un poids spécifique > 1 de particules de matières plastiques avec un poids spécifique < 1 est effectuée ou les coupes cisaillées sont réglées par le biais d'une solution saline correspondant le cas échéant à des coupes d'épaisseur supérieures à 1.

7. Procédé selon la revendication 1 ou 2, **caractérisé en ce que** le produit de départ est inséré dans une centrifugeuse de triage après la déshydratation mécanique et éventuellement l'élimination de particules fines, dans laquelle les particules de cellulose et de matières plastiques sont séparées les unes des autres.

8. Procédé selon la revendication 1 ou 2, **caractérisé en ce que** la cellulose est séparée du produit de départ par tamisage géométrique, de préférence avec un tamis duquel une suspension cellulaire est éliminée par dépression.

9. Procédé selon la revendication 1, **caractérisé en ce qu'**un raffineur à disques dentés est utilisé, dont les disques présentent des dents qui s'engrènent, lesquelles sont disposées de manière espacée sur des cercles concentriques, dans lequel les espaces entre les dents d'un cercle sont si grands que des morceaux de matière plus épaisse ou solide ou le produit pulvérisé jusque là peuvent traverser librement.

10. Procédé selon la revendication 1, **caractérisé en ce qu'**un raffineur à disques à couteaux est utilisé, dans lequel l'écart entre les disques correspond approximativement à l'épaisseur de la matière des pastilles sans adhérence.

11. Procédé selon la revendication 1, **caractérisé en ce que** le produit fractionné au préalable est inséré avec de l'eau dans un tambour de dissolution (triturateur) avant l'insertion dans le raffineur à disques et des fibres de cellulose sont séparées.

12. Procédé selon l'une quelconque des revendications 1 à 11, **caractérisé en ce que** les déchets de matières plastiques ou les pastilles ou les morceaux d'épaisseur supérieure sont triés en fonction des types de matières plastiques et les types de matières plastiques triés au préalable sont amenés au raffineur à disques.

13. Procédé selon l'une quelconque des revendications 1 à 12, **caractérisé en ce que** les types de matières plastiques indésirables sont extraits des déchets de matières plastiques ou des pastilles ou des morceaux plus épais.

14. Procédé selon l'une quelconque des revendications 1 à 13, **caractérisé en ce que** les pastilles et/ou corps provenant du produit de départ séché sont triés en fonction des types de matières plastiques.

15. Procédé selon l'une quelconque des revendications 1 à 14, **caractérisé en ce que** le produit de départ est renvoyé au moins partiellement au raffineur à disques.

16. Procédé selon l'une quelconque des revendications 1 à 15, **caractérisé en ce que** de la matière compactée en vrac est fractionnée dans un raffineur à disques monté en amont à partir des déchets de matières plastiques dans un premier processus de raffinage et le produit du raffinage du raffineur monté en amont est inséré et fractionné dans un autre raffineur à disques.

17. Procédé selon l'une quelconque des revendications 1 à 11, **caractérisé en ce que** le produit de départ du raffineur à disques est amené après la déshydratation mécanique à une autre étape de raffineur à disques.

18. Procédé selon l'une quelconque des revendications 4 à 8 et 17, **caractérisé en ce que** le produit de départ du second raffineur est amené sans déshydratation au processus de séparation.

19. Procédé selon l'une quelconque des revendications 1 à 18, **caractérisé en ce que** le premier cercle de dents est disposé à une distance radiale de l'ouverture d'amenée en partant de l'ouverture d'amenée centrale pour la formation d'une zone d'entrée lors de l'utilisation d'un raffineur à disques dentés.

20. Procédé selon la revendication 19, **caractérisé en ce que** la surface des disques de la zone d'entrée est plate en continu jusqu'au premier cercle de dents.

21. Procédé selon l'une quelconque des revendications 1 à 20, **caractérisé en ce qu'**un raffineur à disques dentés est utilisé, avec lequel l'écart entre les surfaces des disques en partant de l'ouverture d'amenée centrale diminue en continu radialement vers l'extérieur.

22. Procédé selon l'une quelconque des revendications 1 à 21, **caractérisé en ce qu'**un raffineur à disques dentés est utilisé, avec lequel une région radialement extérieure des disques présente des nervures de raffinage radiales ou approximativement radiales, espacées dans le sens de rotation.

23. Procédé selon la revendication 10 ou 22, **caractérisé en ce que** des barrières sont disposées entre les nervures de raffinage de telle sorte que les grains et/ou pastilles pulvérisés sont guidés vers le disque voisin.

24. Procédé selon l'une quelconque des revendications 1 à 22, **caractérisé en ce qu'**un raffineur à disques dentés est utilisé, avec lequel des canaux sont moulés dans les disques dentés en partant de l'ouverture d'amenée centrale à distance périphérique de l'ouverture d'amenée, lesquels s'étendent vers l'extérieur sur une certaine distance.

25. Procédé selon la revendication 24, **caractérisé en ce que** la profondeur des canaux diminue de l'intérieur vers l'extérieur.

26. Procédé selon la revendication 24 ou 25, **caractérisé en ce que** les canaux sont en forme d'arc, dans lequel l'extrémité extérieure des canaux en forme d'arc pointe à l'opposé du sens de rotation.
